# EUROPÄISCHE PATENTANMELDUNG

(11) **EP 4 086 454 A1**
(43) Veröffentlichungstag der Anmeldung: **09.11.2022**
(21) Anmeldenummer: 21172083.4
(22) Anmeldetag: 04.05.2021
(51) Int. Cl.: F03D 7/02, F03D 17/00

(54) **VERFAHREN ZUM BETREIBEN EINER WINDENERGIEANLAGE, WINDENERGIEANLAGE UND WINDPARK**

(71) Anmelder: Wobben Properties GmbH, 26607 Aurich (DE)
(72) Erfinder: Frommann, Johannes, 22083 Hamburg (DE); von Aswege, Enno, 26629 Großefehn (DE); Schulte, Christian, 26849 Filsum (DE)
(74) Vertreter: Eisenführ Speiser

(57) **Zusammenfassung**

Die vorliegende Erfindung betrifft ein Verfahren zum Betreiben einer Windenergieanlage, insbesondere zur Identifikation von ungewöhnlichen Schwingungsereignissen, sowie eine zugehörige Windenergieanlage und einen Windpark. Das Verfahren enthält die Schritte: Bereitstellen eines parametrierten Grenzwertes für einen Wert einer beobachteten Schwingung einer Komponente der Windenergieanlage; Bestimmen eines momentanen Grenzwertes aus dem parametrierten Grenzwert unter Berücksichtigung wenigstens eines momentanen Umgebungsparameters, insbesondere eines für die momentane Anströmung indikativen Umgebungsparameters; Bestimmen eines momentanen Wertes der beobachteten Schwingung der Komponente; Abgleichen des momentanen Wertes der beobachteten Schwingung der Komponente und des momentanen Grenzwertes; und Betreiben der Windenergieanlage in Abhängigkeit des Ergebnisses des Abgleichens.

## Beschreibung

Die vorliegende Erfindung betrifft ein Verfahren zum Betreiben einer Windenergieanlage, eine zugehörige Windenergieanlage sowie einen zugehörigen Windpark.

Windenergieanlagen sind allgemein bekannt. Sie dienen dazu, in dem Wind enthaltene Energie in elektrische Energie umzuwandeln. Die häufigsten Windenergieanlagen sind sogenannte Horizontalachsen-Windenergieanlagen, bei denen auf einem Turm ein Rotor mit einem oder mehreren Rotorblättern angeordnet ist, der sich um eine im Wesentlichen horizontale Achse dreht.

Die Regelung von Windenergieanlagen ist hochkomplex, da verschiedenste Betriebsstellgrößen zusammenhängen, die auf hochdynamische Umgebungsbedingungen teils sensibel reagieren. So kann beispielsweise das Auftreten von Böen zu einem kritischen Anstieg der Betriebslasten führen, da die aerodynamisch wirkenden Rotorblätter plötzlich signifikant größere aerodynamische Kräfte erzeugen.

Dabei ist es unvermeidbar, dass gewisse Schwingungsereignisse, beispielsweise des Turmkopfes der Windenergieanlage, eintreten. Eine der Herausforderungen ist es, einen Betriebszustand oder einen in naher Zukunft liegenden Betriebszustand korrekt zu erkennen, um die richtigen Steuerungs- bzw. Regelungsmaßnahmen zu ergreifen.

Anders ausgedrückt, es ist eine Herausforderung, eine erwartete bzw. übliche Schwingung von einer ungewöhnlichen bzw. unerwünschten Schwingung zu unterscheiden.

Es ist bekannt, zu erwartende Schwingungen und dynamische Lasten für Windenergieanlagen mit Simulationen vorherzusagen. Hier zeigt jedoch die Erfahrung, dass es teilweise zu Abweichungen zwischen Simulation und Realität kommt. Diese Abweichungen, die zu Oszillationen teils bislang unbekannten bzw. in der Regelung nicht berücksichtigten Ursprungs führen, können die Lebensdauer der Windenergieanlage negativ beeinflussen.

Vor diesem Hintergrund war es eine Aufgabe der vorliegenden Offenbarung, den Betrieb einer Windenergieanlage zu verbessern, insbesondere die Erkennung von unüblichen Schwingungen zu verbessern.

In einem Aspekt wird ein Verfahren zum Betreiben einer Windenergieanlage, insbesondere zur Identifikation von ungewöhnlichen Schwingungsereignissen, vorgeschlagen. Das Verfahren enthält die Schritte:
- Bereitstellen eines parametrierten Grenzwertes für einen Wert einer beobachteten Schwingung einer Komponente der Windenergieanlage,
- Bestimmen eines momentanen Grenzwertes aus dem parametrierten Grenzwert unter Berücksichtigung wenigstens eines momentanen Umgebungsparameters, insbesondere eines für die momentane Anströmung indikativen Umgebungsparameters,
- Bestimmen eines momentanen Wertes der beobachteten Schwingung der Komponente,
- Abgleichen des momentanen Wertes der beobachteten Schwingung der Komponente und des momentanen Grenzwertes, und
- Betreiben der Windenergieanlage in Abhängigkeit des Ergebnisses des Abgleichens.

Ein parametrierter Grenzwert ist nicht für sämtliche Werte des Umgebungsparameters konstant, sondern ergibt wenigstens für zwei unterschiedliche Werte des Umgebungsparameters einen unterschiedlichen Wert, der als momentaner Grenzwert bezeichnet wird. Der parametrierte Grenzwert kann in einem Beispiel eine Funktion des Umgebungsparameters und optional weiterer Parameter sein und sich analytisch aus dem Umgebungsparameter und optional den weiteren Parametern berechnen. In anderen Beispielen kann der parametrierte Grenzwert als Tabelle hinterlegt sein, wobei für jeden Wert des Umgebungsparameters bzw. einen jeweiligen Wertebereich des Umgebungsparameters ein zugehöriger Grenzwert in der Tabelle hinterlegt ist.

Der parametrierte Grenzwert kann entweder direkt in einer Anlagensteuerung der Windenergieanlage hinterlegt, beispielsweise gespeichert oder fest verlötet, sein, oder er kann der Windenergieanlage beispielsweise über eine Datenkommunikationsverbindung von einer weiteren Einheit, beispielsweise einem Server im Internet, bereitgestellt werden.

Sämtliche Kombinationen von lokaler und entfernter ("remote") Bereitstellung und Auswertung von Daten sind im Rahmen dieser Offenbarung vorstellbar.

Ebenso kann also der momentane Grenzwert aus dem parametrierten Grenzwert beispielsweise lokal an der Windenergieanlage bestimmt werden oder durch eine entfernte Einheit aus dem momentanen Umgebungsparameter bestimmt werden.

Der momentane Umgebungsparameter kann beispielsweise von der Windenergieanlage selbst gemessen werden. In anderen Ausführungen kann der momentane Umgebungsparameter auch aus anderen Quellen bereitgestellt werden, beispielsweise in meteorologischen Daten, die für die Anströmung indikativ sind, enthalten sein, oder durch eine Messeinrichtung, beispielsweise einen Messmast, in Umgebung der Windenergieanlage bestimmt werden.

Als Komponente der Windenergieanlage werden alle Bauteile und Baugruppen verstanden, die strukturell oder funktional abgrenzbar sind. Diese umfassen, ohne darauf beschränkt zu sein, ein Rotorblatt, einen Rotor, einen Generator, eine Gondel und/oder einen Turmkopf.

Es hat sich herausgestellt, dass ein Grenzwert zur Klassifikation von üblichen und unüblichen Schwingungsereignissen nicht einfach bestimmbar ist. So kann ein Wert einer beobachteten Schwingung in einem Betriebszustand üblich sein, während der gleiche Wert der beobachteten Schwingung in einem anderen Betriebszustand unüblich ist. Dies hat zur Folge, dass ein fest vorgegebener Grenzwert entweder zu einer geringen Sensitivität oder zu einer geringen Spezifität führt, je nachdem, wie hoch der Grenzwert gesetzt wird.

Die vorliegende Offenbarung schafft es nun, den Grenzwert derart bereitzustellen, dass dieser die Zuverlässigkeit der Klassifikation, das heißt die Sensitivität und Spezifität, erhöht. Dies wird dadurch erreicht, dass ein mit der Anströmung parametrierter Grenzwert bereitgestellt wird. Versuche haben herausgestellt, dass eine sehr gute Korrelation besonders zwischen der Anströmung und erwarteten Schwingungen besteht, wobei üblicherweise höhere Schwingungen bei einer höheren Anströmung üblich sind. Anders ausgedrückt, in einem Beispiel wird der parametrierte Grenzwert für höhere Werte der Anströmung auch einen höheren Wert als momentanen Grenzwert liefern.

Schließlich wird der Begriff des Betreibens im Rahmen der vorliegenden Offenbarung breit gefasst und umfasst sowohl ein Regeln der Windenergieanlage aber auch ein Kommunizieren bzw. Mitteilen von Ereignissen. Dies ist in einer bevorzugten Ausführung das Hinweisen auf ein unübliches Schwingungsereignis, sodass dieses dann beispielsweise per Fernwartung von einem Mitarbeiter manuell überprüft werden kann. Das Betreiben umfasst demnach sämtliche Aspekte, die in dem Betrieb der Windenergieanlage auftreten.

Vorzugsweise ist der Wert der beobachteten Schwingung ein die Schwingung kennzeichnender Wert oder aus einem solchen abgeleitet, einschließlich einer Beschleunigung, einer maximalen Schwingungsauslenkung oder eine Frequenzkomponente.

Andere Beispiele des Wertes der beobachteten Schwingung enthalten Mittelwerte über vorbestimmte Zeiträume und/oder Schwingungsperioden oder andere geometrische Parameter, die aus einem Messsignal abgeleitet werden, wie Ableitungen, Betragswerte, etc. Auch Kombinationen der Werte sind vorstellbar.

Vorzugsweise enthält der Umgebungsparameter eine Windgeschwindigkeit, wobei die Windgeschwindigkeit gemessen und/oder über einen Windschätzer aus einem momentanen Betriebspunkt der Windenergieanlage bestimmt wird.

Entscheidend für die Wahl des Umgebungsparameters ist, dass dieser eine gute Korrelation mit den beobachteten Schwingungen bzw. Beschleunigungen zeigt. Ob der Umgebungsparameter direkt gemessen oder ein Anlagenkennwert herangezogen wird, der eine hohe Korrelation mit dem Umgebungsparameter aufweist, beispielsweise Windschätzung/Windmessung, ist hierbei unerheblich. Es muss also insbesondere eine eindeutige Zuordnung zwischen dem Umgebungsparameter und der Anströmung/Windgeschwindigkeit möglich sein.

Auch kann der Umgebungsparameter bei hinreichender Genauigkeit von anderen Einheiten, die von der Windenergieanlage verschieden sind, bereitgestellt werden. Diese anderen Einheiten sind beispielsweise meteorologische Messmasten, andere Windenergieanlagen, Satellitendaten, etc. Eine Genauigkeit ist dann hinreichend, wenn der erhaltene Umgebungsparameter eine zuverlässige Aussage über den Zustand an der Windenergieanlage liefert. Jeder von einer anderen Einheit bereitgestellte Umgebungsparameter ist hierfür vorzugsweise hinreichend genau, der im Mittel einen Fehler von weniger als 20%, insbesondere weniger als 10%, bezogen auf den tatsächlichen Umgebungsparameter an der Windenergieanlage aufweist, was im Zweifel durch Messungen nachprüfbar ist.

In weiteren bevorzugten Ausgestaltungen enthält der Umgebungsparameter zusätzlich weitere Windeigenschaften, einschließlich Scherung, Luftdichte und/oder Turbulenzintensität, etc.

Vorzugsweise weist die Windgeschwindigkeit einen Bezugszeitraum von höchstens 1 Minute, insbesondere zwischen 10 und 30 Sekunden und besonders bevorzugt von 10 Sekunden auf.

Es hat sich herausgestellt, dass insbesondere der Zeitraum von 10 Sekunden eine besonders gute Korrelationsgüte zeigt. Hierbei sind auch kürzere und längere Zeiträume möglich, wobei sich als obere Grenze für den Bezugszeitraum der Zeitraum von 1 Minute gezeigt hat. Längere Bezugszeiträume sind nicht hinreichend genau aufgelöst, um unübliche Schwingungsereignisse zu erkennen.

Vorzugsweise wird der Wert der beobachteten Schwingung an der Komponente gemessen. Hierfür ist insbesondere ein geeigneter Messaufnehmer unmittelbar oder mittelbar in Kontakt mit der Komponente, um Schwingungsspektrum bzw. Beschleunigungen aufzunehmen.

Vorzugsweise erfolgt die Messung mit wenigstens einem aus, vorzugsweise mehreren aus, einem Beschleunigungssensor, einem Gyroskop, einem Inkrementalgeber, einer Dehnungsmessung, einem optischen Sensor und/oder einem Leistungsmesser.

Ein Beschleunigungssensor kann beispielsweise in einem Turmkopf, also einem oberen Bereich des Turms, und optional zusätzlich im Turmverlauf angeordnet sein. Der Beschleunigungssensor kann hierfür ein- oder mehrdimensional ausgeführt sein und entsprechend Schwingungen bzw. Beschleunigungen in einer oder mehreren Dimensionen aufnehmen.

Die Schwingungen in mehreren Dimensionen können einzeln ausgewertet oder kombiniert, beispielsweise aufsummiert, werden.

Ein Gyroskop ist beispielsweise in einem mitrotierenden Teil der Nabe angeordnet und kann beispielsweise auch eine Drehzahlmessung ermöglichen. Auch im stehenden System kann ein Gyroskop zur Messung von Verkippungen und/oder höheren Schwingungsmoden des Turms vorgesehen sein.

Eine Strecken-/Winkelmessung am Blattanschluss kann beispielsweise mittels Inkrementalgeber erfolgen. Für eine Beobachtung einer Schwingung kann eine derartige Messung beispielsweie eine Auflösung von zumindest 0,1 ° örtlich und 10 ms zeitlich umfassen, wobei auch andere, insbesondere höhere, Auflösungen, vorstellbar sind.

Eine Dehnungsmessung kann beispielsweise in einem Turmfuß und/oder in einem Blattanschluss des Rotorblattes mit einem Dehnungsmessstreifen oder anderen Sensoren erfolgen. In dem ersten Fall können damit Turmschwingungen beobachtet werden, in dem zweiten Fall eignet sich die Dehnungsmessung dazu, um Blattbiegemomente zu bestimmen.

In weiteren Ausführungen sind optische Messverfahren beispielsweise zur Beobachtung von Biegungen der Blätter durch Reflexion, wie beispielsweise von fos4x, oder BladeVision bevorzugt.

In weiteren Ausführungen sind Leistungsmessungen, beispielsweise von einem Transformator und/oder der Netzleistung, bevorzugt.

Vorzugsweise wird der Wert der beobachteten Schwingung aus Messungen an einer von der beobachteten Komponente verschiedenen Komponente der Windenergieanlage abgeleitet. Diese Ausführung stellt also eine Alternative zu der direkten Messung an der Komponente dar.

Vorzugsweise ist die beobachtete Komponente der Rotor der Windenergieanlage und ein momentaner Wert der Schwingung der Drehzahl des Rotors wird aus einem Generatorstrom abgeleitet.

Vorzugsweise enthält die Komponente der Windenergieanlage, deren Wert einer Schwingung beobachtet wird, eine oder mehrere der nachfolgenden Komponenten:
- einen Turmkopf, wobei insbesondere eine Turmkopfbeschleunigung beobachtet wird,
- ein Rotorblatt, wobei insbesondere Schwingungen eines Pitchwinkels und/oder einer Schwenklast des Rotorblattes beobachtet werden,
- einen Generator, wobei insbesondere Schwingungen einer erzeugten Leistung des Generators beobachtet werden, und
- einen Rotor, wobei insbesondere Schwingungen einer Drehzahl des Rotors beobachtet werden.

Vorzugsweise umfasst in dem Fall, dass eine Turmkopfbeschleunigung des Turmkopfes beobachtet wird, der Schritt des Abgleichens der momentanen Turmkopfbeschleunigung und des momentanen Grenzwertes:
- Filtern, insbesondere Tiefpassfiltern, der Turmkopfbeschleunigung, um Komponenten der Turmkopfbeschleunigung mit vorzugsweise höchstens 0,8 Hz zu beobachten, und/oder
- Durchführen einer Extrempunktbestimmung der Turmkopfbeschleunigung, wobei der bestimmte Extrempunkt der Turmkopfbeschleunigung mit dem Grenzwert abgeglichen wird, und/oder
- Bestimmen einer mittleren Amplitude der Turmkopfbeschleunigung, wobei die bestimmte mittlere Amplitude mit dem Grenzwert abgeglichen wird.

Die Extrempunktbestimmung ist vorzugsweise eine lokale Extrempunktbestimmung, bei welcher der Extrempunkt während eines vorgegebenen Betrachtungszeitraums bestimmt wird. Der vorgegebene Betrachtungszeitraum ist vorzugsweise nicht kürzer als 2 s und vorzugsweise nicht länger als 10 s.

Vorzugsweise kann die mittlere Amplitude über eine bestimmte Zykluszahl von Schwingungszyklen des Turms bestimmt werden, wobei die bestimmte Zykluszahl besonders bevorzugt in einem Bereich von 10 bis 30 Zyklen liegt. Es ist bekannt, dass Türme üblicherweise eine geringe erste Eigenfrequenz von bspw. 0,15 Hz aufweisen. Besonders bevorzugt wird die Zykluszahl und/oder eine Zeitgrenze der Mittelung auf Grundlage der ersten Eigenfrequenz des Turms der Windenergieanlage gewählt.

Besonders bevorzugt ist die Zykluszahl in Abhängigkeit der Turmeigenfrequenz anpassbar. Dies hat sich als besonders vorteilhaft insbesondere bei Querschwingungen erwiesen, da eine Abkling-Zeitkomponente der Querschwingungen von der Eigenfrequenz abhängt, so dass unerwartete Querschwingungen nur bei Mittelung über eine angemessen gewählte Zykluszahl detektierbar sind.

Besonders bevorzugt sind unterschiedliche Grenzwerte für den Fall, in dem der Extrempunkt der Turmkopfbeschleunigung bestimmt wird, und für den Fall, in dem die mittlere Amplitude bestimmt wird, vorgesehen.

So verbleibt bei der Turmschwingungsüberwachung jeder Schwingungsanteil mit beispielsweise kleiner 0,8 Hz im Messsignal. Mit der Extrempunktbestimmung kann eine einmalig hohe Schwingung detektiert werden, wobei auch die mittlere Amplitude oder ein gleitender Durchschnitt der Extremwerte auswertbar ist. Insbesondere ist für die Auswertung keine Spektralauswertung nötig. In weiteren Ausgestaltungen kann aber auch das Spektrum der Schwingung zusätzlich zur Klassifikation ausgewertet werden.

Vorzugsweise umfasst in dem Fall, dass Schwingungen eines Pitchwinkels des Rotorblattes beobachtet werden, der Schritt des Abgleichens der momentanen Schwingung des Pitchwinkels und des momentanen Grenzwertes ein Filtern, insbesondere Hochpassfiltern, der momentanen Schwingung des Pitchwinkels, um windangeregte Schwingungen zu eliminieren.

Mit der Filterung, insbesondere Hochpassfilterung, des Pitchwinkels ist es demnach möglich, windangeregte Schwingungen zu eliminieren. Die verbleibenden Komponenten sind daher für unübliche Schwingungen von größerer Relevanz. Als Eckfrequenz für die Hochpassfilterung ist ein Wert von beispielsweise 0,05 Hz vorstellbar, wobei auch andere Werte vorstellbar sind. In anderen Ausführungen sind auch andere Arten der Filterung vorteilhaft.

Es hat sich herausgestellt, dass in dem Fall von Einzelblattverstellungen, bei der also die Pitchwinkel der unterschiedlichen Rotorblätter jedenfalls eine individuelle Komponente enthalten, die Verwendung eines mittleren Pitchwinkels von Vorteil ist. Der mittlere Pitchwinkel bezeichnet hier vorzugsweise eine Mittelung bzw. Durchschnittsbildung über die zeitgleich anliegenden Pitchwinkel der einzelnen Rotorblätter und damit vorzugsweise keine zeitliche Mittelung. Die Einzelblattverstellung selbst verursacht nämlich eine zusätzliche 1p Schwingungskomponente, die sich im mittleren Pitchwinkel aber im Wesentlichen aufhebt.

Vorzugsweise umfasst in dem Fall, dass Schwingungen eines Pitchwinkels des Rotorblattes beobachtet werden, der Schritt des Abgleichens der momentanen Schwingung des Pitchwinkels und des momentanen Grenzwertes zusätzlich oder alternativ ein Unterscheiden von einmaligen Ereignissen, insbesondere einmaligen Überschreitungen des momentanen Grenzwertes, und länger andauernden Ereignissen.

In dieser Ausgestaltung ist die Windgeschwindigkeitsabhängigkeit gegeben durch die Blattsensitivität, welche mit steigendem Pitchwinkel steigt. Das Verfahren gemäß der Offenbarung ermöglicht durch Auswertung ein Erkennen von einmaligen und lang andauernden Schwingungsereignissen. Einmalige Überschreitungen des momentanen Grenzwertes sind beispielsweise auf Regeleingriffe bzw. Eingriffe einer Steuerung zur Vermeidung von Extremlasten zurückzuführen.

Länger andauernde Überschreitungen sind beispielsweise auf nicht erwartete Reglerresonanzen oder eine Einkopplung einer Drehzahlschwingung in die Drehzahlregelung zurückzuführen, was eine Turmquerschwingung zur Folge haben kann.

Vorzugsweise umfasst in dem Fall, dass Schwingungen einer Schwenklast des Rotorblattes beobachtet werden, der Schritt des Abgleichens der momentanen Schwingung der Schwenklast und des momentanen Grenzwertes ein Kompensieren eines Schwingungsbeitrags, dessen Frequenz der Rotordrehung und betragsmäßig dem Gravitationsbeitrag entspricht.

Gegenüber einem Herausfiltern der 1p Schwingungen hat diese Umsetzung den Vorteil, dass lediglich der mit 1p wirkende Gravitationsbeitrag herausgerechnet wird aber 1p Schwingungen anderer Ursache im Spektrum verbleiben. Damit ist das Ergebnis des Herausrechnens direkt die Strukturschwingung, die auf eine übliche bzw. unübliche Schwingung überprüft werden kann. Vorzugsweise kann in diesem Fall zusätzlich eine allgemeine Filterung, beispielsweise eine offsetfreie Hochpassfilterung, angewandt werden.

Vorzugsweise umfasst in dem Fall, dass Schwingungen einer erzeugten Leistung des Generators beobachtet werden, der Schritt des Abgleichens der momentanen Schwingungen der erzeugten Leistung und des momentanen Grenzwertes ein Filtern, insbesondere Hochpassfiltern, der erzeugten Leistung, um windangeregte Schwingungen zu eliminieren.

Vorzugsweise umfasst in dem Fall, dass Schwingungen einer erzeugten Leistung des Generators beobachtet werden, der Schritt des Abgleichens der momentanen Schwingungen der erzeugten Leistung und des momentanen Grenzwertes alternativ oder zusätzlich ein Kompensieren von durch die Steuerung der Windenergieanlage induzierten Leistungsänderungen.

Die Leistung definiert sich windangeregt bis max. 0,1 Hz, was auch als Windturbulenz bezeichnet wird. Mittels der Filterung, insbesondere einer Hochpassfilterung, verbleiben nur höher frequente und daher im Kern unerwartete Schwingungen im Spektrum. Abzüglich bspw. gewollter Leistungsschwingungen - wie solcher induzierten Leistungsänderungen zur Reduktion von Turmschwingen - verbleibt nur noch ein unerwartetes Frequenzspektrum.

Das Leistungssignal wird vorzugsweise als gleitender Durchschnitt ausgewertet, so dass ein geringerer Schwellwert verglichen mit einer Auswertung eines Extremwertes ermöglicht wird. Dies ist hauptsächlich darauf zurückzuführen, dass der gleitende Durchschnitt robuster und weniger anfällig für kurzzeitige Schwankungen ist. Somit sind in diesem Beispiel auch geringfügige aber langanhaltende unerwartete Schwingungsamplituden der Leistung erkennbar.

Im Zusammenhang mit dieser Offenbarung kann ein Durchschnitt oder Mittelwert beispielsweise als arithmetischer Mittelwert ausgeführt sein. In anderen Ausführungen sind auch andere Kennwert für die zentrale Tendenz einer Verteilung als Durchschnitt bzw. Mittelwert geeignet, wie beispielsweise das geometrische oder quadratische Mittel.

Vorzugsweise umfasst in dem Fall, dass Schwingungen einer Drehzahl des Rotors beobachtet werden, der Schritt des Abgleichens der momentanen Drehzahl des Rotors und des momentanen Grenzwertes ein Filtern, insbesondere Hochpassfiltern, der beobachteten Drehzahl, um windangeregte Schwingungen zu eliminieren.

Vorzugsweise enthält das Verfahren ferner die Schritte:
- Bestimmen, insbesondere Simulation, einer erwarteten Betriebslast der Windenergieanlage in einem normalen Betrieb,
- Vergleichen der erwarteten Betriebslast der Windenergieanlage mit einer gemessenen tatsächlichen Belastung der Windenergieanlage und
- Anpassen des parametrierten Grenzwertes auf Grundlage des Vergleichs.

Gemäß dieser Ausführung kann demnach beispielsweise für Lebenszeitbetrachtungen der Einzelfall der Anlage berücksichtigt werden. Wird festgestellt, dass die tatsächliche Windenergieanlage im Betrieb von dem abweicht, was für diese Windenergieanlage beispielsweise in einer Simulation bestimmt wird, so sind die tatsächlich auftretenden Lasten größer als die vorher bestimmten Lasten. Dies ist selbstverständlich auch in der anderen Richtung möglich, nämlich wenn die Lasten niedriger als erwartet ausfallen.

In einer bevorzugten Weiterbildung kann diese sich dann bildende Lastreserve bzw. die übermäßig anfallenden Lasten zur Anpassung der Betriebsführung herangezogen werden. Beispielsweise können Lastreserven verwendet werden, um eventuell vorhandene Leistungsreserven der Windenergieanlage bei hinreichendem Wind zu heben.

Wenn aber, beispielsweise durch unerwartete Windbedingungen wie eine höhere Scherung und/oder Turbulenz, eine unerwartet hohe Last an der Windenergieanlage erfahren, so bietet sich die Möglichkeit, die Betriebsführung zur Reduktion der Lasten anzupassen.

Vorzugsweise umfasst das Anpassen des parametrierten Grenzwertes ferner ein Erhöhen des parametrierten Grenzwertes um einen vorbestimmten Erhöhungsfaktor, wenn der parametrierte Grenzwert überschritten wurde.

Vorzugsweise umfasst das Anpassen des parametrierten Grenzwertes ferner alternativ oder zusätzlich ein Reduzieren des parametrierten Grenzwertes um einen vorbestimmten Reduktionsfaktor, wenn der parametrierte Grenzwert über einen vorbestimmten Zeitraum nicht überschritten wurde.

Der Erhöhungsfaktor und/oder der Reduktionsfaktor kann als Faktor relativ zu dem parametrierten Grenzwert beispielsweise zwischen 0 und 200% liegen. Besonders bevorzugt ist der Erhöhungsfaktor und/oder der Reduktionsfaktor auch von der Windgeschwindigkeit abhängig, so dass bei höheren Windgeschwindigkeiten ein anderer Erhöhungsfaktor und/oder Reduktionsfaktor als bei niedrigeren Windgeschwindigkeiten ermöglicht ist.

Der vorbestimmte Zeitraum beträgt vorzugsweise wenigstens eine Stunde und ebenso vorzugsweise höchstens 10 Tage. Besonders bevorzugt beträgt der vorbestimmte Zeitraum etwa oder genau 1 Tag.

Vorzugsweise enthält der Schritt des Betreibens der Windenergieanlage in Abhängigkeit des Ergebnisses des Abgleichens ferner die nachfolgenden Schritte:
- Detektieren eines ungewöhnlichen Schwingungsereignisses, wenn der momentane Wert der beobachteten Schwingung den momentanen Grenzwert übersteigt bzw. unterschreitet, und
- Kommunizieren, insbesondere über SCADA, des detektierten ungewöhnlichen Schwingungsereignisses.

Das Kommunizieren, beispielsweise über SCADA, kann auch ein Protokollieren der relevanten Daten, insbesondere relevanter Messdaten der beobachteten Schwingung oder anderer Daten, wie weiterer Messsensoren anderer Komponenten oder Betriebskenngrößen, umfassen.

In einem weiteren Aspekt wird eine Windenergieanlage mit einer Steuerung vorgeschlagen, wobei die Steuerung dazu ausgebildet ist, das Verfahren gemäß der Offenbarung umzusetzen.

Die Steuerung kann hierfür beispielsweise die gleichen Komponenten wie eine bekannte Anlagensteuerung einer Windenergieanlage aufweisen, einschließlich einer Recheneinheit wie einem Mikroprozessor und/oder einer CPU sowie geeigneten Speicherkomponenten und Schnittstellen. In diesem Fall unterscheidet sich die Steuerung demnach durch die darauf gespeicherte und/oder ausgeführte Software von den bekannten Steuerungen von Windenergieanlagen. In anderen Ausführungen kann die Umsetzung des Verfahrens auch teilweise oder vollständig durch Hardware erfolgen.

In noch weiteren Ausführungen ist die Steuerung aufgeteilt, wobei sich lediglich ein Teil der Steuerung im räumlichen Bereich der Windenergieanlage, beispielsweise in einer Gondel der Windenergieanlage oder innerhalb eines Turms der Windenergieanlage befindet und weitere Teile der Steuerung auf einer räumlich entfernten Rechnereinheit implementiert sind. Beispielsweise umfasst die entfernte Rechnereinheit einen Server, der über das Internet mit den weiteren Teilen der Steuerung verbunden sind.

In einem weiteren Aspekt wird ein Windpark mit mehreren Windenergieanlagen gemäß der Offenbarung vorgeschlagen.

Der Windpark gemäß diesem Aspekt sowie die Windenergieanlage gemäß dem zuvor beschriebenen Aspekt kann mit sämtlichen bevorzugten Ausgestaltungen des offenbarten Verfahrens kombiniert werden und dabei die gleichen Vorteile erreichen.

Weitere Vorteile und bevorzugte Ausgestaltungen werden nachfolgend mit Verweis auf die beigefügten Figuren beschrieben. Hierbei zeigen:
- Fig. 1: schematisch und exemplarisch eine Windenergieanlage;
- Fig. 2: schematisch und exemplarisch einen Windpark;
- Fig. 3: schematisch und exemplarisch Korrelationen von Schwingungen und Umgebungsparametern;
- Fig. 4: schematisch und exemplarisch Korrelationen von Schwingungen und Umgebungsparametern;
- Fig. 5a und 5b: schematisch und exemplarisch unterschiedliche Schwingungsereignisse;
- Fig. 6: schematisch und exemplarisch die Detektion ungewöhnlicher Schwingungsereignisse;
- Fig. 7a und 7b: schematisch und exemplarisch den Einfluss eines Betrachtungszeitraums auf die Korrelation.

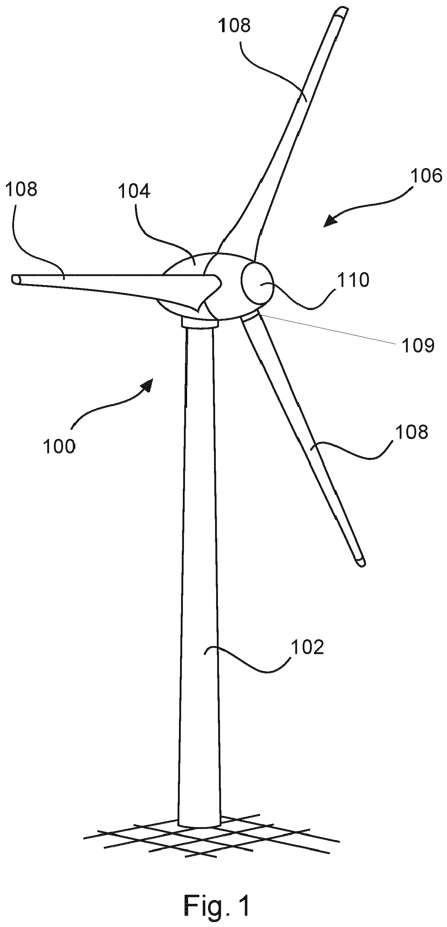

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 109 der jeweiligen Rotorblätter 108 verändert werden.

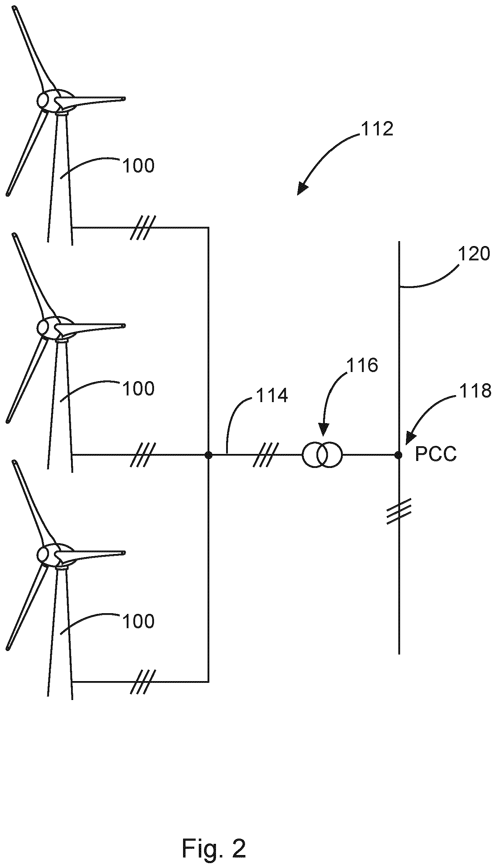

Fig. 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112. Es kann beispielsweise das Parknetz 114 anders gestaltet sein, indem beispielsweise auch ein Transformator am Ausgang jeder Windenergieanlage 100 vorhanden ist, um nur ein anderes Ausführungsbeispiel zu nennen.

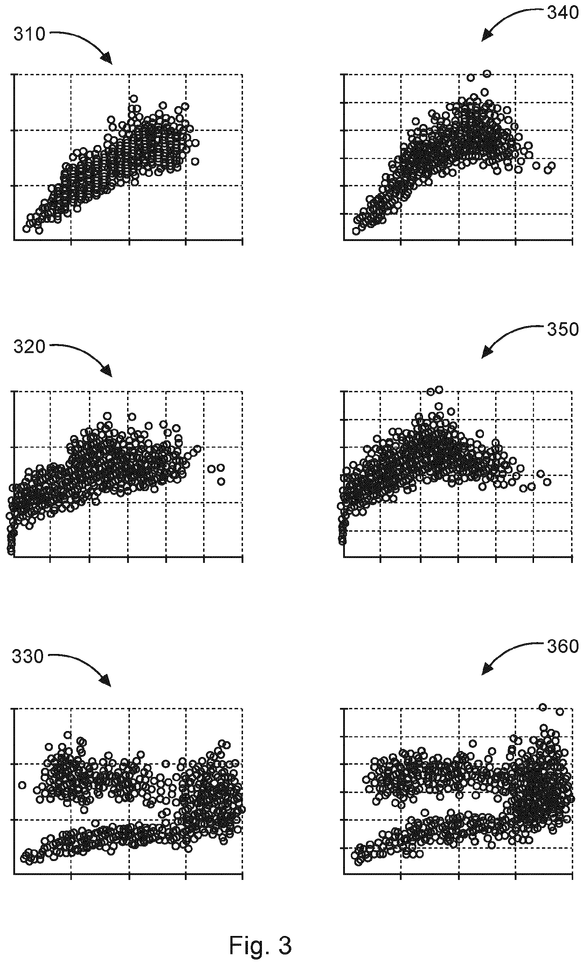

Fig. 3 zeigt schematisch und exemplarisch eine Korrelation zwischen beobachteten Schwingungen einer Komponente der Windenergieanlage 100 auf der vertikalen Achse und einem Umgebungsparameter auf der horizontalen Achse. Die beobachtete Schwingung ist in den links gezeichneten Graphen 310, 320, 330 eine Beschleunigung eines oberen Bereiches des Turms, auch als Turmkopf bezeichnet, entlang der Windrichtung. In den rechts gezeichneten Graphen 340, 350, 360 ist die beobachtete Schwingung eine Beschleunigung eines mittleren Bereiches des Turms. Der Umgebungsparameter enthält in Graphen 310 und 340 eine Windgeschwindigkeit, in Graphen 320 und 350 einen Pitchwinkel und in Graphen 330 und 360 ein Generatordrehmoment.

Es kann gesehen werden, dass eine besonders gute Korrelation, das heißt eine möglichst eindeutige Zuordnung zwischen beobachteter Schwingung und Umgebungsparameter, in Graph 310 für die Turmkopfbeschleunigung und die Windgeschwindigkeit besteht. Dies gilt ebenso für die Beschleunigung des mittleren Turmbereichs in Graph 340. Die Pitchwinkel in Graphen 320 bzw. 350 sind insbesondere für den Pitchwinkel 0° uneindeutig. Für höhere Pitchwinkel ist die Korrelation eindeutig. Für das Generatordrehmoment in Graphen 330 bzw. 360 ist die Zuordnung von einem Moment zu einer Beschleunigung nicht eindeutig.

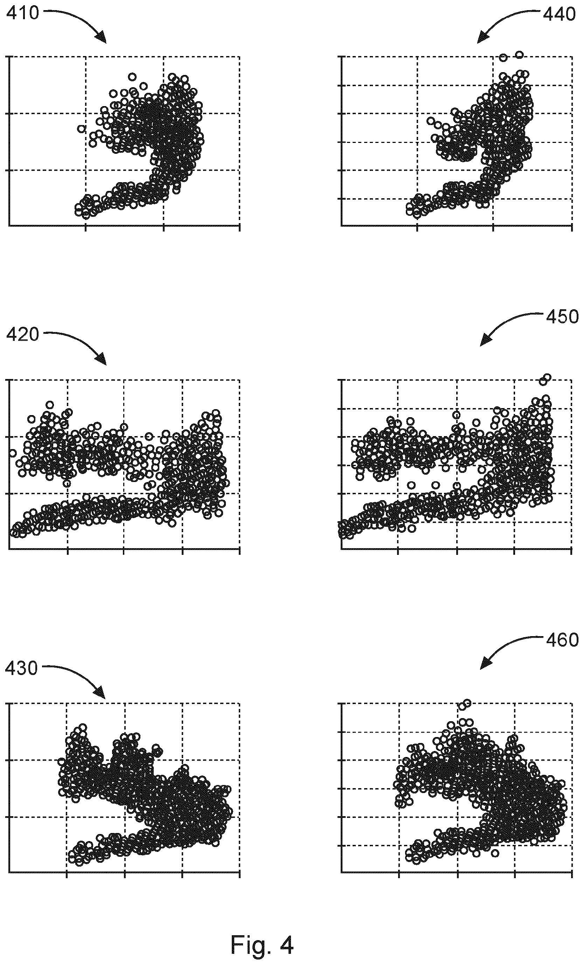

Fig. 4 zeigt weitere sechs Graphen 410, 420, 430, 440, 450, 460, die eine Korrelation zwischen Turmkopfbeschleunigung (410, 420, 430) bzw. Beschleunigung in der Mitte des Turms (440, 450, 460) zu weiteren Parametern zeigt. Diese Werte schließen eine Drehzahl in Graphen 410, 440, eine erzeugte elektrische Leistung in Graphen 420, 450 und eine Kraft auf die Rotornabe in Graphen 430 bzw. 460 ein. Keiner der in Fig. 4 gezeigten Zusammenhänge zeigt eine für die vorliegende Offenbarung hinreichende Korrelation.

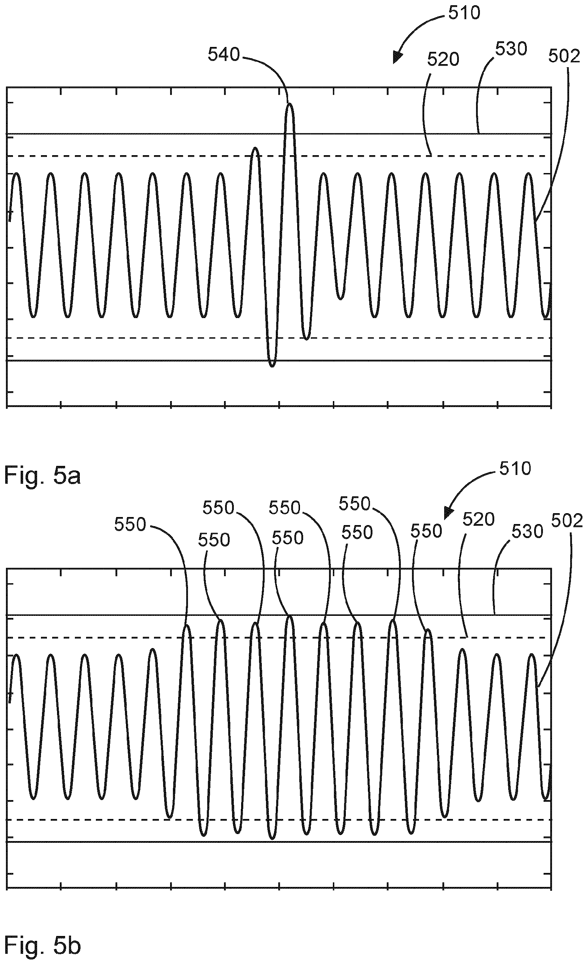

Fig. 5a zeigt schematisch und exemplarisch den Verlauf einer ersten Art von Schwingung. Ein Graph 510 zeigt einen zeitlichen Verlauf einer Beschleunigung. Mit gestrichelter Linie ist ein erster Grenzwert 520 gezeigt, der beispielsweise 25 % über dem Durchschnittswert der Schwingung liegt. In diesem Beispiel wird davon ausgegangen, dass der Wert der Schwingung 502 typischerweise zwischen + 1 und - 1 m/sec² verläuft.

Natürlich sind auch andere Beschleunigungswerte bzw. Grenzwerte vorstellbar. Als zweiter Schwellwert 530 ist ein Extremwertschwellwert beispielsweise von 1,6 vorgesehen. Es kann gesehen werden, dass die Schwingung 502 an einem Punkt 540 den zweiten Schwellwert 530 überschreitet. Es wird demnach von einem Extremereignis gesprochen. Das bedeutet, dass eine sehr hohe Beschleunigung für einen kurzen Zeitraum überschritten wird.

Im Gegensatz dazu zeigt Fig. 5b einen zweiten Fall einer unüblichen Schwingung, nämlich eine Beschleunigung, die für eine längere Zeit, nämlich in diesem Beispiel acht Perioden, über dem ersten Schwellwert 520 liegt. Es wird bevorzugt, dass ein einmaliges Überschreiten des Grenzwertes 520 nicht zur Detektion eines derartigen Schwingungsereignisses führt, sondern ein mehrfaches Überschreiten des Schwellwertes 520 erforderlich ist. Hierfür kann beispielsweise die Zahl von Extremwerten 550, die hintereinander über dem Schwellwert 520 liegen, gezählt werden und mit einem vorbestimmten Wert, beispielsweise 5 oder 8, verglichen werden. Natürlich sind auch andere Anzahlen von Überschreitungen möglich.

Es sollte beachtet werden, dass im Gegensatz hierzu das einmalige Überschreiten des Schwellwertes 530, vgl. Fig. 5a, bereits ausreicht, um ein unübliches Ereignis zu detektieren. Auch Kombinationen von beiden Ereignissen sind vorstellbar.

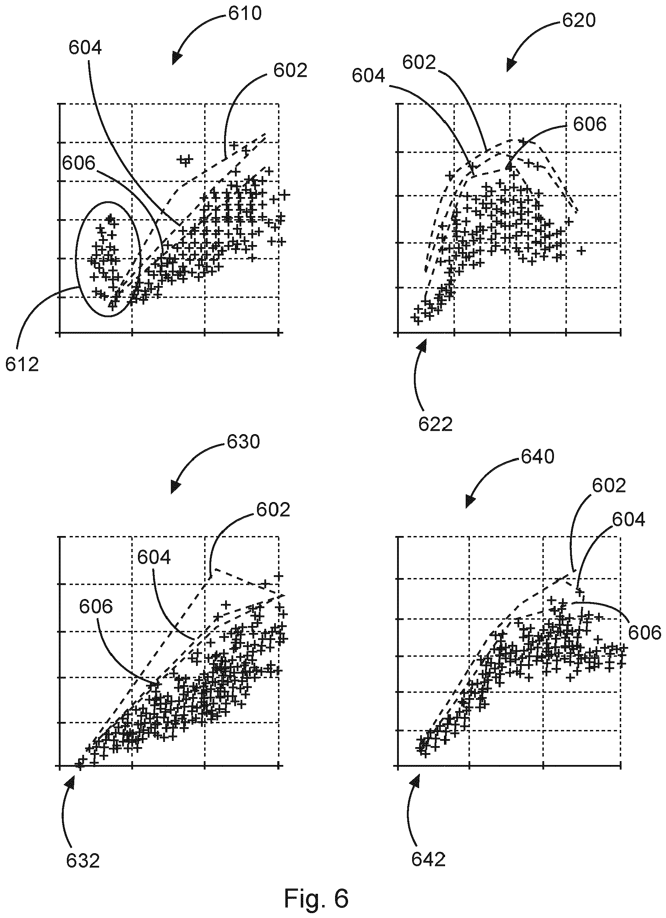

Fig. 6 zeigt schematisch und exemplarisch vier Graphen 610, 620, 630 und 640, welche die erfindungsgemäße Erkennung unüblicher Schwingungsereignisse verdeutlicht. Allen vier Graphen 610, 620, 630, 640 liegt die Windgeschwindigkeit auf der horizontalen Achse zugrunde, die über eine Turmkopfbeschleunigung in Querrichtung in Graph 610, eine Turmkopfbeschleunigung in Längsrichtung in Graph 630, eine Turmmittenschwingung in Seitenrichtung in Graph 620 und eine Turmmittenschwingung in Längsrichtung in Graph 640 aufgetragen ist.

Eine 5-t-Massenunwucht bei 1 m Rotorradius wurde simuliert und die Auswirkung auf die beobachtete Schwingung ausgewertet. Für die jeweiligen Graphen wurden drei unterschiedliche Formulierungen eines parametrierten Grenzwertes 602, 604 und 606 vorgesehen. Den Parametrierungen liegen unterschiedliche Ideen zugrunde, beispielsweise unterschiedliche Konfidenzintervalle bzw. unterschiedliche Funktionen. Der Grenzwert 602 ist aggressiver gewählt, das heißt er wird erst bei deutlich höheren Beschleunigungen überschritten, während die weiteren Grenzwerte 604 bzw. 606 konservativer formuliert sind, sodass auch geringere Schwingungsereignisse, die den Beschleunigungsgrenzwert überschreiten, detektierbar sind.

Natürlich sind die parametrierten Grenzwerte 602, 604, 606 abhängig von der beobachteten Schwingung und lediglich zur Vereinfachung der Darstellung mit den gleichen Bezugszeichen gekennzeichnet. Aufgrund der unterschiedlichen beobachteten Schwingungen werden auch die Werte der Grenzwerte 602, 604, 606 in den Graphen 610, 620, 630, 640 wie dargestellt unterschiedlich sein.

Es kann gesehen werden, dass lediglich in Graph 610 für die Turmkopfbeschleunigung in Querrichtung signifikante Überschreitungen der Grenzwerte 602, 604, 606 detektierbar sind, die in einem Bereich 612 zusammengefasst sind. Die unerwartet hohen Beschleunigungen bei geringen Windgeschwindigkeiten gehen wie theoretisch erwartet auf eine Stimulation einer ersten Turmeigenmode in der Seitenrichtung, das heißt einer Turmkopfoszillation, zurück.

Eine geringfügige Überschreitung der Grenzwerte lässt sich auch für die X- und Y-Beschleunigungen in der Turmmitte sowie die X-Beschleunigung bzw. Längsbeschleunigung am Turmkopf detektieren. Die entsprechenden Punkte sind mit 622, 632 und 642 gekennzeichnet. Derartige geringfügige Überschreitungen lassen sich beispielsweise als außergewöhnliche Fälle klassifizieren.

Es kann gesehen werden, dass beispielsweise für den Fall einer Rotorunwucht die Turmkopfbeschleunigung in Querrichtung in Graph 610 die deutlichsten Ausschläge zeigt. Geringfügige Auswirkungen lassen sich aber auch in anderen beobachteten Schwingungen detektieren.

Das erfindungsgemäße Verfahren besteht daher in der Identifikation von Abhängigkeiten und Korrelationen zwischen Beschleunigungen bzw. Geschwindigkeiten und Umgebungsparametern, das heißt Zuständen der Windenergieanlage bzw. der Umgebung. Für die Beschleunigungen bzw. Schwingungen, die von relevanten Umgebungszuständen abhängen, beispielsweise der Windgeschwindigkeit, der erzeugten elektrischen Energie, etc., werden Grenzen definiert. Die Sensitivität der Grenzen hinsichtlich verschiedener Störungen wird analysiert und damit die definierten Grenzen überprüft. Gegebenenfalls werden die definierten Grenzen angepasst, beispielsweise immer dann, wenn der Grenzwert zu häufig überschritten wird.

Zudem ist vorgesehen, dass eine kontinuierliche Verbesserung möglich ist, da das Überwachungssystem einmal implementiert permanent auf allen damit ausgerüsteten Windenergieanlagen betrieben werden kann. Damit wird ermöglicht, dass sich die bestimmten Grenzwerte permanent verbessern, wodurch die Erkennung unüblicher Schwingungsereignisse permanent präzisiert wird.

Die Erfindung kann sich daher in folgende Bestandteile aufteilen lassen. Zunächst wird in einem ersten Schritt, beispielsweise offline, eine Bestimmung geeigneter Grenzwerte sowie Identifikation passender Abhängigkeiten vorgenommen. Diese werden dann online bzw. in Echtzeit mit Momentanwerten abgeglichen. Schließlich folgt in einem dritten Schritt eine automatische Anpassung der zuvor bestimmten Grenzwerte auf Grundlage der tatsächlichen Belastung der jeweiligen Windenergieanlage insbesondere auch online bzw. in Echtzeit.

Für die erste Funktion wird ein ungewöhnliches Schwingungsereignis im Wesentlichen durch den Anlagenbetreiber oder Anlagenhersteller als eine von der Simulation abweichende Schwingung definiert. Die von der Simulation abweichende Schwingung kann beispielsweise eine stärkere Amplitude aufweisen.

Für die beobachtete Schwingung werden auf Basis von Simulationen Grenzwerte bestimmt, beispielsweise 10 Minuten Windgeschwindigkeitsmittelwerte in beispielsweise 2 m/s-Schritten in einem Windgeschwindigkeitsbereich von 2 bis 28 m/s, wobei die Grenzen natürlich nur beispielhaft sind. Auch sind, wie beispielsweise vorstehend ausgeführt, kürzere Bezugszeiträume für die Windgeschwindigkeit von insbesondere unter 1 Minute vorteilhaft.

Besonders bevorzugt bilden die Simulationen das Betriebslastniveau der Windenergieanlage 100 im normalen Betrieb DLC 1.2 gemäß DIN EN IEC 61400-1 ab.

Zur Bestimmung der Grenzwerte werden die gleichen Betriebswerte wie in der Anlagensteuerung selbst genutzt. Die maximalen Schwingungen, beispielsweise Messungen von Turmschwingungen, und deren gleichzeitige Windgeschwindigkeit, beispielsweise von einem Windschätzer erhaltene Windgeschwindigkeit, werden zur Bestimmung der Grenzwerte ausgelesen.

Hier wird die Windgeschwindigkeit als Beispiel eines Umgebungsparameters herangezogen, wobei auf gleiche Weise auch eine alternative oder zusätzliche Verwendung von Scherung und/oder Tubulenz oder weiteren geeigneten Umgebungsparametern möglich ist.

Diese werden dann anhand des Umgebungsparameters, beispielsweise der Windgeschwindigkeit, gruppiert, wobei sich beispielsweise - abermals für die Windgeschwindigkeit - eine Schrittweite von 1 m/s anbietet. Dann wird für jede der Gruppen der Werte des Umgebungsparameters beispielsweise mithilfe von Quantilbestimmung, ein Grenzwert bestimmt. Dieser Grenzwert wird dann als parametrierter Grenzwert, der in diesem Fall von dem Umgebungsparameter wie beispielsweise der Windgeschwindigkeit abhängt, bereitgestellt.

In dem zweiten Bestandteil, dem Abgleich von Momentan- zu Grenzwerten, werden insbesondere die erhaltenen Messdaten gefiltert. Dann wird vorzugsweise der Betriebszustand der Windenergieanlage 100 bestimmt, wobei sich hierfür vorzugsweise ein Mittelwert, beispielsweise ein gleitender 10-Sekunden-Mittelwert, des Umgebungsparameters anbietet. Von der zu beobachtenden Schwingung wird ein Momentanwert sowie vorzugsweise auch ein gleitender Mittelwert bestimmt. Hierbei wird als gleitender Mittelwert insbesondere der Peak-Wert der Schwingung herangezogen.

Anhand des in dem Erstbestandteil bestimmten parametrierten Grenzwertes wird dann der aktuelle Grenzwert bestimmt, wobei in einer Ausführung bei einer Abweichung des aktuellen Wertes des Umgebungsparameters von der Granulation des parametrierten Grenzwertes zwischen den Punkten interpoliert, insbesondere linear interpoliert, wird. Daran schließt sich der Abgleich der zu überwachenden bzw. beobachtenden Werte mit den Grenzwerten an.

In dem Fall, dass eine Grenzwertüberschreitung detektiert wird, kann in einer bevorzugten Ausgestaltung eine Informationsmeldung mit den hochaufgelösten Betriebsmessdaten gesendet werden, beispielsweise an SCADA gesendet werden, womit es zur Analyse beispielsweise durch einen Regelungsingenieur verfügbar ist. Die Auflösung der Betriebsmessdaten ist veränderbar und kann beispielsweise auf 10 Hz eingestellt sein.

Eine Grenzwertüberschreitung ist ein Hinweis dafür, dass die Windenergieanlage 100 eine Betriebssituation mit erhöhter Last erfährt. Die Auslastung hängt darüber hinaus beispielsweise von standortspezifischen Bedingungen ab. Um diesen Faktoren, die spezifisch für die Windenergieanlage 100 sind, Sorge zu tragen, wird weiter eine Anpassung der parametrierten Grenzwerte entsprechend der Situation implementiert. Wenn der Grenzwert überschritten wurde, wird der Grenzwert insbesondere um einen Faktor erhöht; wenn der Grenzwert über einen gewissen Zeitraum nicht überschritten wurde, wird der Grenzwert entsprechend um einen Faktor reduziert.

Die vorliegende Offenbarung kann sich in der Steuerung in Echtzeit einer einzelnen Windenergieanlage 100 auf Grundlage von gemessenen Schwingungen als vorteilhaft herausstellen.

Die vorliegende Erfindung ermöglicht die Identifikation, insbesondere die automatische Identifikation von Schwingungsereignissen wie Turmschwingungsereignissen, die bei dauerhaftem Auftreten zu einer Überschreitung der berücksichtigten Materialermüdungslasten führen kann. Dies soll frühzeitig erkannt werden, sodass die Möglichkeit gegeben wird, darauf zu reagieren und Anpassungen beispielsweise in der Steuerung vorzunehmen. Maßnahmen können, aber müssen nicht zwangsläufig softwareseitig behoben werden, die Behebung derartig identifizierter Ereignisse kann auch beispielsweise durch Hardwaremaßnahmen erfolgen. Es wird bevorzugt, dass sich die Mitigationsmaßnahme stets durch die aus diesem Ereignis identifizierte Ursache definiert.

Zudem ermöglicht die vorliegende Offenbarung, die standortspezifische Lastauslastung durch Nutzung des sich automatisch einpendelnden Grenzwertmultiplikators abzuschätzen. Vorzugsweise kann der Grenzwertmultiplikator durch Einführung einer Windgeschwindigkeitsabhängigkeit erweitert werden, um auch eine Windverteilung bei der Abschätzung einer Lastauslastung zu berücksichtigen. Natürlich ist die vorliegende Offenbarung auch auf andere Schwingungs- oder Lastmessungen wie beispielsweise die Blattlastmessung anwendbar und nicht auf die exemplarisch beschriebenen Turmschwingungen beschränkt.

Demnach ermöglicht es die vorliegende Offenbarung, ein ungewöhnliches Schwingungsereignis in Korrelation zum gleichzeitigen Betriebszustand der Windenergieanlage 100 zu identifizieren, wobei der Betriebszustand insbesondere durch Windgeschwindigkeit, Leistung, Drehzahl und Pitchwinkel definiert ist.

Die erfindungsgemäße Lösung kann in einer Steuerungssoftware der einzelnen Windenergieanlage 100 implementiert sein. Damit entstehen keine zusätzlichen Material- und/oder Inbetriebnahmekosten. Vorzugsweise erfolgt die Kommunikation von ungewöhnlichen Schwingungsereignissen mit hochaufgelösten Betriebsmessdaten automatisch und in Echtzeit. Die Überwachung der Windenergieanlage 100 ist vorzugsweise jederzeit aktiv, solange sich die Windenergieanlage 100 in Betrieb befindet. In dem für die Windgeschwindigkeit eine von einem Windschätzer geschätzte Windgeschwindigkeit herangezogen wird, wird eine Kenngröße in dem Algorithmus verwendet, die den Betriebszustand der Windenergieanlage 100 sehr gut und in einer Dimension bestimmt.

Erweiterungen der vorliegenden Offenbarung beziehen beispielsweise eine Scherungs- und Turbulenzabhängigkeit ein. Damit kann der parametrierte Grenzwert noch genauer bestimmt werden und die Klassifikation von Schwingungsereignissen als übliche bzw. unübliche Schwingungsereignisse weiter verfeinert werden.

In einer weiteren Ausgestaltung wird eine Zusammenfassungsinformation beispielsweise auf monatlicher Basis erzeugt. Diese kann dem Anlagenbetreiber in regelmäßigen Abständen eine Übersicht über den Zustand seiner Windenergieanlage 100 liefern. Beispielsweise führt der Bericht sämtliche im Berichtszeitraum detektierten unüblichen Schwingungsereignisse aus.

Schließlich wird in einer Weiterführung des Algorithmus eine Erkennung der Anregung des beobachteten unüblichen Schwingungsereignisses implementiert. Beispielsweise wird es dadurch möglich, eine 1P-Anregung zu erkennen, aus der geschlossen werden kann, dass der Rotor bzw. die Rotordrehung ursächlich für diese Schwingungsanregung ist, bzw. eine 3P-Anregung zu erkennen, die mit dem Rotorblattdurchgang in Verbindung gebracht werden kann.

Die Erkennung kann eine automatische Klassifizierung des Ereignisses, beispielsweise in "bereits bekanntes Schwingungsereignis" oder "bisher unbekanntes Schwingungsereignis", enthalten. Auch andere Klassifizierungen wie "üblich" oder "unüblich" sind denkbar.

Je nach Erkennung bzw. Klassifizierung des Ereignisses kann die Schwingungsüberwachung weitere Schritte veranlassen oder nicht. Beispielsweise kann von einer Mitteilung bzw. Benachrichtigung abgesehen werden, wenn dem Ereignis eine bestimmte Klassifizierung zugeordnet ist, beispielsweise wenn ein vergleichbares Ereignis bereits zuvor als "üblich" oder "bekannt" gekennzeichnet wurde. In anderen Ausgestaltungen kann die Ausführung weiterer Schritte auch positiv an eine bestimmte Klassifizierung gekoppelt sein, so dass die Schritte also nur dann ausgeführt werden, wenn ein bestimmtes Klassifizierungsergebnis vorliegt.

Es werden nun weitere Anwendungen der Schwingungsüberwachung sowie des offenbarten Verfahrens auf beobachtete Schwingungen beschrieben.

In einer Ausführung werden Blattschwingungen der Rotorblätter in der Rotorebene beobachtet. Edgewise Blattschwingungen bzw. Blattschwenklasten sind maßgeblich durch Gravitation und damit einen 1P-Frequenzanteil dominiert. Dies vereinfacht das Erkennen zusätzlicher ungewöhnlicher Schwingungen. Die gravitationsgetriebene 1 P-Frequenzkomponente kann entweder hochpassgefiltert werden oder durch Abschätzung herausgerechnet werden. Zur Abschätzung der Gravitationskomponente wird insbesondere eine Rotorposition, eine Blattmasse, eine Gravitation und ein Massenschwerpunkt des Rotors herangezogen.

Überlagern sich beispielsweise strukturdynamische Schwingungen über die Blattschwingungen bzw. Blattschwenklasten, können diese damit erkannt werden. Durch Überwachung der "Restlast", welche im Wesentlichen Strukturresonanzfrequenzen enthält, kann die dominierende Schwingungsart automatisch identifiziert werden.

Dadurch wird eine automatische Überwachung von Resonanzschwingungen ermöglicht, welche nicht unmittelbar durch beispielsweise Turmschwingungsüberwachung erkannt werden kann. Dies ist der Fall, da sich die Blattschwenklast beispielsweise nicht in der Turmkopfschwingung ausprägt. Ein Beispiel einer solchen Schwingung ist eine kollektive Rotorschwenkmode.

Auf die gleiche Weise können sich Pitchschwingungen auswerten lassen. Für die Beobachtung einer Schwingung des Pitchwinkels eignet sich insbesondere ein mittlerer Pitchwinkel in dem Fall, dass eine Einzelblattverstellung der einzelnen Rotorblätter möglich ist. Pitchschwingungen können beispielsweise durch eine Drehzahlregelerresonanz angeregt sein bzw. aufgeprägt werden. Um windangeregte Schwingungen zu eliminieren, kann vorzugsweise eine Hochpassfilterung mit einer Eckfrequenz von beispielsweise etwa 0,05 Hz erfolgen.

Die Windgeschwindigkeitsabhängigkeit ist durch die Blattsensitivität gegeben, welche mit steigendem Pitchwinkel ansteigt. Einmalige und langandauernde Schwingungsereignisse können erkannt werden, wobei einmalige Schwingungsereignisse beispielsweise auf Regeleingriffe bzw. Eingriffe einer Steuerung zur Vermeidung von Extremlasten zurückzuführen sind, bedeuten können und länger andauernde Schwingungsereignisse beispielsweise eine Einkoppelung einer Drehzahlschwingung in der Drehzahlregelung, beispielsweise einer Turmquerschwingung, darstellen. Die gleiche Logik wie bei der Turmschwingungsüberwachung findet Anwendung.

Zum automatischen Identifizieren einer dominierenden Schwingungsart einer identifizierten ungewöhnlichen oder unerwarteten Schwingung kann beispielsweise eine Frequenzauswertung durchgeführt werden. Abhängig von der Strukturdynamik der Windenergieanlage 100 sowie der Drehzahl kann die Schwingung, beispielsweise die Turmschwingung, aber auch jede andere der beobachteten Schwingungen, eine dominante Frequenz aufweisen. Ein Beispiel zum Erkennen dieser dominanten Frequenz ist eine Zerlegung des Signals im Fourier-Raum, beispielsweise durch Fourier-Transformation des Signals gefolgt von einem Gruppieren der Frequenzbereiche.

Hierbei werden insbesondere strukturdynamische und 1P-Frequenzen berücksichtigt. Anschließend wird das gruppierte Frequenzspektrum in dominante Bestandteile zerlegt, beispielsweise durch Amplitudenvergleiche mit einer mittleren Amplitude. Ob ein oder mehrere Bestandteile des zerlegten Spektrums dominant sind oder nicht, wird beispielsweise durch einen Vergleich der unterschiedlichen Anteile überprüft. In einem Beispiel kann ein Anteil eines Frequenzbereiches dominant sein, wenn er mehr als einen vorgegebenen Schwellwert des gesamten Spektrums enthält. Beispielsweise kann ein Bestandteil als dominant bezeichnet werden, wenn er über 75 % des Spektrums, bezogen auf die Amplitude, enthält. Dieser Wert von 75 % ist natürlich nur beispielhaft und kann auch abhängig von der beobachteten Schwingung angepasst werden.

Wird festgestellt, dass ein oder mehrere Bestandteile dominant sind, wird abschließend überprüft, ob diese Frequenz als Ursache in Betracht zu ziehen ist. Hier gilt es beispielsweise 1P-Anregungen, die beispielsweise auf die Gravitation zurückzuführen sind, auszuschließen. Der letzte Schritt des Überprüfens ist demnach ein Plausibilitätstest.

Auch wenn die Auswertung der Frequenzen über eine Fourier-Analyse des Signals beschrieben ist, so sind selbstverständlich alle weiteren bekannten Verfahren zur Frequenzanalyse des Signals ebenso anwendbar.

In einem weiteren Aspekt können zusätzliche Abhängigkeiten, die zu einer Erhöhung oder Reduktion des parametrierten Grenzwertes bzw. eines erwarteten Niveaus der beobachteten Schwingung führen, erlernt werden. Diese schließen eine Scherung, eine Turbulenzintensität, die Windrichtung, insbesondere aufgrund von Nachlaufeffekten anderer Windenergieanlagen, Hindernissen, etc., ein. Besonders bevorzugt hat die Turbulenz in solchen Fällen eine Abhängigkeit zur Windrichtung. Der Anpassungsfaktor des parametrierten Grenzwertes kann in Abhängigkeit von beispielsweise diesen Größen zu einem Auslastungsfaktor erweitert werden, der insbesondere mit entsprechender Abhängigkeit und Kenntnis von der Windhistorie zu einer Abschätzung der Lastauslastung gekoppelt werden kann. Die Windhistorie beinhaltet insbesondere eine Auftretenshäufigkeit von Windgeschwindigkeiten, Turbulenzintensitäten, Scherung, etc.

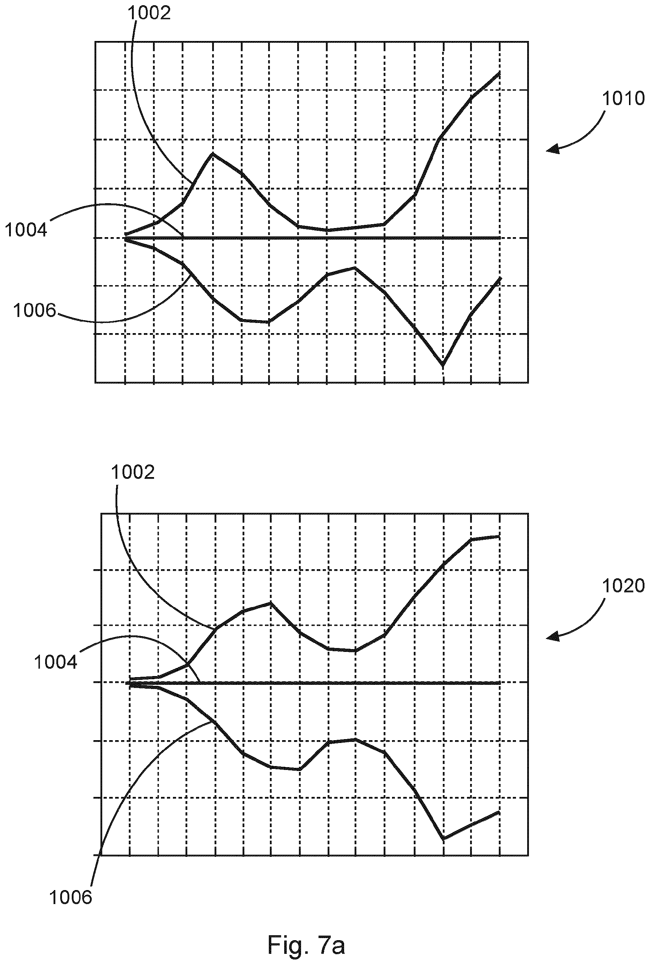

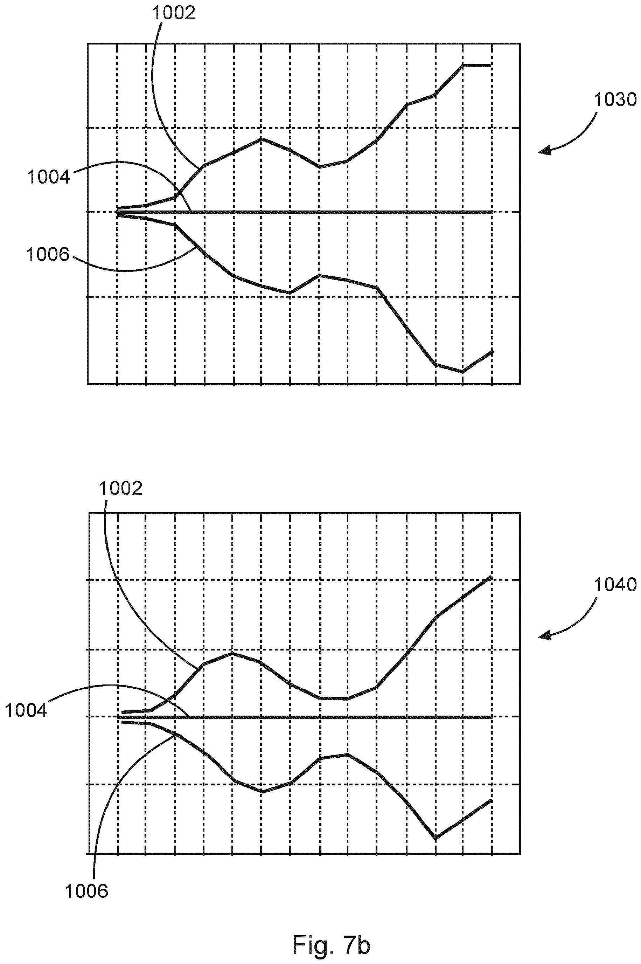

Fig. 7a und 7b zeigt schließlich schematisch und exemplarisch den Verlauf einer von der Windenergieanlage 100 erzeugten elektrischen Leistung auf der vertikalen Achse über die Windgeschwindigkeit auf der horizontalen Achse. Die Leistung ist insbesondere Hochpassgefiltert, um den Windeinfluss herauszukürzen. Die vier Graphen 1010, 1020, 1030 und 1040 unterscheiden sich in der Länge des gleitenden Durchschnittsfensters zur Mittelung der Leistung. In dem Graph 1010 beträgt die Länge 60 Sekunden, in dem Graph 1020 beträgt die Länge 5 Sekunden, in dem Graph 1030 beträgt die Länge 2,5 Sekunden und in dem Graph 1040 beträgt die Länge 10 Sekunden. Dargestellt sind jeweils ein Maximalwert 1002, ein Mittelwert 1004 und ein Minimalwert 1006 der Leistung. Es kann gesehen werden, dass mit zunehmender Verringerung der Länge des gleitenden Durchschnitts eine bessere Korrelation der Leistungsschwankung zur Windgeschwindigkeit erhalten wird. Dies ist insbesondere in dem Graph 1030 zu sehen.

Demnach können einmalige Leistungseinbrüche, beispielsweise aufgrund unzureichender Leistungseinregelung am Generator, sowie langanhaltender Unter- und/oder Übererfüllung der Leistungsanforderung, beispielsweise aufgrund falscher Abschätzung von Verlustleistungen, erkannt werden. Demnach kann die Einhaltung einer vorgegebenen Kennlinie, beispielsweise einer Drehzahl-Leistungskennlinie, präzise überwacht werden. Durch Einregeln der Trafoleistung sollten langanhaltende Abweichungen hierbei in normalem Betrieb nicht auftreten.

## Patentansprüche

1. Verfahren zum Betreiben einer Windenergieanlage, insbesondere zur Identifikation von ungewöhnlichen Schwingungsereignissen, enthaltend die Schritte:
- Bereitstellen eines parametrierten Grenzwertes für einen Wert einer beobachteten Schwingung einer Komponente der Windenergieanlage,
- Bestimmen eines momentanen Grenzwertes aus dem parametrierten Grenzwert unter Berücksichtigung wenigstens eines momentanen Umgebungsparameters, insbesondere eines für die momentane Anströmung indikativen Umgebungsparameters,
- Bestimmen eines momentanen Wertes der beobachteten Schwingung der Komponente,
- Abgleichen des momentanen Wertes der beobachteten Schwingung der Komponente und des momentanen Grenzwertes, und
- Betreiben der Windenergieanlage in Abhängigkeit des Ergebnisses des Abgleichens.

2. Verfahren nach Anspruch 1, wobei der Wert der beobachteten Schwingung ein die Schwingung kennzeichnender Wert ist oder aus einem solchen abgeleitet ist, einschließlich einer Beschleunigung, einer maximalen Schwingungsauslenkung oder eine Frequenzkomponente.

3. Verfahren nach Anspruch 1 oder 2, wobei der Umgebungsparameter eine Windgeschwindigkeit enthält, wobei die Windgeschwindigkeit gemessen und/oder über einen Windschätzer aus einem momentanen Betriebspunkt der Windenergieanlage bestimmt wird.

4. Verfahren nach Anspruch 3, wobei die Windgeschwindigkeit einen Bezugszeitraum von höchstens 1 Minute, insbesondere zwischen 10 und 30 Sekunden und besonders bevorzugt von 10 Sekunden aufweist.

5. Verfahren nach einem der vorstehenden Ansprüche, wobei der Wert der beobachteten Schwingung an der Komponente gemessen wird.

6. Verfahren nach Anspruch 5, wobei die Messung mit wenigstens einem aus, vorzugsweise mehreren aus, einem Beschleunigungssensor, einem Gyroskop, einem Inkrementalgeber, einer Dehnungsmessung, einem optischen Sensor und einem Leistungsmesser erfolgt.

7. Verfahren nach einem der vorstehenden Ansprüche 1 bis 5, wobei der Wert der beobachteten Schwingung aus Messungen an einer von der beobachteten Komponente verschiedenen Komponente der Windenergieanlage abgeleitet wird.

8. Verfahren nach Anspruch 7, wobei die beobachtete Komponente der Rotor der Windenergieanlage ist und ein momentaner Wert der Schwingung der Drehzahl des Rotors aus einem Generatorstrom abgeleitet wird.

9. Verfahren nach einem der vorstehenden Ansprüche, wobei die Komponente der Windenergieanlage, deren Wert einer Schwingung beobachtet wird, eine oder mehrere der nachfolgenden Komponenten enthält:
- einen Turmkopf, wobei insbesondere eine Turmkopfbeschleunigung beobachtet wird,
- ein Rotorblatt, wobei insbesondere Schwingungen eines Pitchwinkels und/oder einer Schwenklast des Rotorblattes beobachtet werden,
- einen Generator, wobei insbesondere Schwingungen einer erzeugten Leistung des Generators beobachtet werden, und
- einen Rotor, wobei insbesondere Schwingungen einer Drehzahl des Rotors beobachtet werden.

10. Verfahren nach Anspruch 9, wobei eine Turmkopfbeschleunigung des Turmkopfes beobachtet wird, wobei der Schritt des Abgleichens der momentanen Turmkopfbeschleunigung und des momentanen Grenzwertes umfasst
- Filtern, insbesondere Tiefpassfiltern, der Turmkopfbeschleunigung, um Komponenten der Turmkopfbeschleunigung mit vorzugsweise höchstens 0,8 Hz zu beobachten, und/oder
- Durchführen einer Extrempunktbestimmung der Turmkopfbeschleunigung, wobei der bestimmte Extrempunkt der Turmkopfbeschleunigung mit dem Grenzwert abgeglichen wird, und/oder
- Bestimmen einer mittleren Amplitude der Turmkopfbeschleunigung, wobei die bestimmte mittlere Amplitude mit dem Grenzwert abgeglichen wird.

11. Verfahren nach einem der Ansprüche 9 oder 10, wobei Schwingungen eines Pitchwinkels des Rotorblattes beobachtet werden, wobei der Schritt des Abgleichens der momentanen Schwingung des Pitchwinkels und des momentanen Grenzwertes umfasst:
- Filtern, insbesondere Hochpassfiltern, der momentanen Schwingung des Pitchwinkels, um windangeregte Schwingungen zu eliminieren, und/oder
- Unterscheiden von einmaligen Ereignissen, insbesondere einmaligen Überschreitungen des momentanen Grenzwertes, und länger andauernden Ereignissen.

12. Verfahren nach einem der Ansprüche 9 bis 11, wobei Schwingungen einer Schwenklast des Rotorblattes beobachtet werden, wobei der Schritt des Abgleichens der momentanen Schwingung der Schwenklast und des momentanen Grenzwertes umfasst:
- Kompensieren eines Schwingungsbeitrags, dessen Frequenz der Rotordrehung und betragsmäßig dem Gravitationsbeitrag entspricht.

13. Verfahren nach einem der Ansprüche 9 bis 12, wobei Schwingungen einer erzeugten Leistung des Generators beobachtet werden, wobei der Schritt des Abgleichens der momentanen Schwingungen der erzeugten Leistung und des momentanen Grenzwertes umfasst:
- Filtern, insbesondere Hochpassfiltern, der erzeugten Leistung, um windangeregte Schwingungen zu eliminieren, und/oder
- Kompensieren von durch die Steuerung der Windenergieanlage induzierten Leistungsänderungen.

14. Verfahren nach einem der Ansprüche 9 bis 13, wobei Schwingungen einer Drehzahl des Rotors beobachtet werden, wobei der Schritt des Abgleichens der momentanen Drehzahl des Rotors und des momentanen Grenzwertes umfasst:
- Filtern, insbesondere Hochpassfiltern, der beobachteten Drehzahl, um windangeregte Schwingungen zu eliminieren.

15. Verfahren nach einem der vorstehenden Ansprüche, weiter enthaltend die Schritte:
- Bestimmen, insbesondere Simulation, einer erwarteten Betriebslast der Windenergieanlage in einem normalen Betrieb,
- Vergleichen der erwarteten Betriebslast der Windenergieanlage mit einer gemessenen tatsächlichen Belastung der Windenergieanlage und
- Anpassen des parametrierten Grenzwertes auf Grundlage des Vergleichs.

16. Verfahren nach Anspruch 15, wobei das Anpassen des parametrierten Grenzwertes umfasst:
- Erhöhen des parametrierten Grenzwertes um einen vorbestimmten Erhöhungsfaktor, wenn der parametrierte Grenzwert überschritten wurde, und/oder
- Reduzieren des parametrierten Grenzwertes um einen vorbestimmten Reduktionsfaktor, wenn der parametrierte Grenzwert über einen vorbestimmten Zeitraum nicht überschritten wurde.

17. Verfahren nach einem der vorstehenden Ansprüche, wobei der Schritt des Betreibens der Windenergieanlage in Abhängigkeit des Ergebnisses des Abgleichens enthält:
- Detektieren eines ungewöhnlichen Schwingungsereignisses, wenn der momentane Wert der beobachteten Schwingung den momentanen Grenzwert übersteigt bzw. unterschreitet, und
- Kommunizieren, insbesondere über SCADA, des detektierten ungewöhnlichen Schwingungsereignisses.

18. Windenergieanlage mit einer Steuerung, wobei die Steuerung dazu ausgebildet ist, das Verfahren gemäß einem der vorstehenden Ansprüche umzusetzen.

19. Windpark mit mehreren Windenergieanlagen nach Anspruch 18.
